# DEMANDE DE BREVET EUROPEEN

(11) **EP 2 061 130 A1**
(43) Date de publication de la demande: **20.05.2009**
(21) Numéro de dépôt: 08305792.7
(22) Date de dépôt: 10.11.2008
(51) Int. Cl.: H02J 7/00, H02J 7/14, H02J 9/00, B60R 16/03

(54) **Dispositif de commande de l'alimentation électrique d'un appareil embarqué sur un véhicule à moteur à combustion interne**

(30) Priorité: 19.11.2007 FR 0708087
(71) Demandeur: Scheiber S.A., 85120 Saint Pierre Du Chemin (FR)
(72) Inventeur: Groleau, Olivier, 85500, LES HERBIERS (FR)
(74) Mandataire: Laget, Jean-Loup

(57) **Abrégé**

L'invention concerne un dispositif de commande (1) de l'alimentation électrique d'un appareil embarqué (3) sur un véhicule à moteur (2) à combustion interne équipé d'une batterie (4) électrique reliée à un alternateur (12).

Selon l'invention, le dispositif comprend, d'une part, des moyens de détection du niveau de vibrations du moteur du véhicule et des moyens de détection de la valeur de la tension aux bornes (+BAT, -BAT) de la batterie, lesdits moyens de détection délivrant en sortie des signaux électriques, et, d'autre part, une unité de traitement et de commande, recevant en entrée les signaux électriques et émettant ou non en sortie, en fonction desdits signaux reçus, un signal de commande (D+) de l'alimentation électrique dudit appareil.

## Description

La présente invention concerne de manière générale les véhicules à moteur à combustion interne équipés d'une batterie électrique.

L'invention concerne plus particulièrement un dispositif de commande directe ou indirecte de l'alimentation électrique d'un appareil embarqué sur un véhicule à moteur à combustion interne équipé d'une batterie électrique reliée à un alternateur.

Lorsqu'un appareil électrique, tel qu'un appareil frigorifique ou groupe froid, est embarqué sur un véhicule, il est souhaitable de ne l'alimenter que lorsque l'alternateur fonctionne, de manière à ne pas décharger la batterie.

L'information de l'état de fonctionnement de l'alternateur est généralement disponible à partir de la centrale de calcul pour les voitures qui en sont équipées. Cependant, pour récupérer cette information, il faudrait intervenir sur le câblage réalisé par le constructeur au niveau de l'alternateur ou de la centrale de calcul, ce que le constructeur interdit. Dans l'hypothèse d'une telle intervention, la garantie du constructeur ne s'appliquerait plus.

Pour détecter si l'alternateur fonctionne, il est possible de mesurer la tension aux bornes de la batterie. En effet, lorsque la tension mesurée est supérieure à une certaine valeur seuil, on peut en déduire que la batterie est en charge. Cependant, le fait que la batterie soit en charge ne signifie pas forcément que la batterie soit rechargée par l'alternateur. En effet, sur certains véhicules, il peut être prévu une batterie auxiliaire qui est rechargée par un chargeur sur le secteur. Cette batterie auxiliaire est le plus souvent reliée, par un relais de couplage, à la batterie principale, et la tension mesurée aux bornes de la batterie est alors celle du chargeur. Dans ce cas, bien que l'on mesure une tension de charge de la batterie, l'alternateur ne fonctionne pas, et il n'est donc pas souhaitable d'alimenter l'appareil.

En outre, lorsque l'appareil embarqué est un compteur de temps, ou horamètre, pour déterminer le temps de fonctionnement du véhicule, cet horamètre ne doit être activé que lorsque le moteur est démarré. Plusieurs solutions sont possibles pour déterminer si le moteur fonctionne. Il a été ainsi envisagé par la demanderesse de déterminer le niveau de vibrations du moteur qui, au-delà d'un niveau de référence, est caractéristique de l'état démarré ou tournant du moteur. Cependant, il a été observé que pour certains régimes de fonctionnement et/ou dans certaines conditions de fonctionnement du moteur, le niveau de vibrations est amorti et devient inférieur au niveau de référence. Ainsi, un faible niveau de vibrations du moteur ne signifie pas forcément que le moteur est arrêté.

Le document WO 01/86735 décrit un dispositif de commande d'alimentation d'un équipement électrique d'un véhicule, tel que les phares, via la batterie dudit véhicule. La commande d'alimentation de l'équipement électrique est réalisée de manière à éviter la décharge de la batterie. Le dispositif de commande est conçu de sorte que, lorsque le véhicule est arrêté, les vibrations ne sont plus détectées, ce qui est interprété comme un arrêt du moteur du véhicule, et si la tension de la batterie vient à descendre en dessous d'une valeur de référence, l'interrupteur est ouvert de manière à empêcher une décharge trop importante de la batterie. Pour le passage d'un état de non-alimentation à un état autorisant l'alimentation de l'équipement électrique, il suffit, selon ce document, que des vibrations soient détectées. Cependant, les vibrations détectées peuvent résulter de l'environnement extérieur du véhicule sans que le moteur dudit véhicule ne soit démarré. Une telle solution n'est donc pas satisfaisante.

La présente invention a pour but de permettre de détecter de manière fiable l'état de fonctionnement de l'alternateur sans avoir à intervenir sur le câblage de l'alternateur ou sur la centrale de calcul du constructeur.

Un autre but de l'invention est de détecter de manière fiable l'état de fonctionnement du moteur du véhicule.

A cet effet, l'invention concerne un dispositif de commande directe ou indirecte de l'alimentation électrique d'un appareil embarqué sur un véhicule à moteur à combustion interne équipé d'une batterie électrique reliée à un alternateur, ledit dispositif comprenant, d'une part, des moyens de détection du niveau de vibrations du moteur du véhicule et des moyens de détection de la valeur de la tension aux bornes de la batterie, lesdits moyens de détection délivrant en sortie des signaux électriques, et, d'autre part, une unité de traitement et de commande, recevant en entrée les signaux électriques issus desdits moyens de détection, ladite unité comportant des moyens de comparaison pour comparer lesdits signaux reçus à des signaux de référence et des moyens de commande émettant ou non en sortie, en fonction au moins du résultat de la comparaison entre lesdits signaux reçus et lesdits signaux de référence, un signal de commande directe ou indirecte de l'alimentation électrique dudit appareil,
caractérisé en ce que l'unité de traitement et de commande est conçue pour exécuter au moins deux opérations conditionnelles, consistant pour la première opération dite opération conditionnelle d'alimentation en ce que, si, pendant une durée prédéterminée, les moyens de comparaison déterminent que le niveau de vibrations détecté du moteur est supérieur à un niveau de référence et que la valeur de la tension détectée est supérieure à une valeur de référence, l'unité via les moyens de commande émet le signal de commande directe ou indirecte de l'alimentation électrique dudit appareil ; et pour la deuxième opération dite opération conditionnelle de non-alimentation en ce que, si, pendant une durée prédéterminée, les moyens de comparaison déterminent que le niveau de vibrations détecté est inférieur à un niveau de référence et que la valeur de la tension détectée est inférieure à une valeur de référence, l'unité via les moyens de commande stoppe ou empêche l'émission du signal de commande directe ou indirecte de l'alimentation électrique dudit appareil,
et en ce que le passage de l'état de non-émission à l'état d'émission est asservi au remplissage des conditions de la première opération et le passage de l'état d'émission à l'état de non-émission est asservi au remplissage des conditions de la deuxième opération.

La prise en compte à la fois de la tension aux bornes de la batterie et du niveau de vibrations du moteur du véhicule permet de déterminer de manière fiable si le moteur est en état de marche. En particulier, lorsque le moteur démarre, on observe un creux de tension de la batterie ce qui ne signifie pas forcément que le moteur est arrêté. Ainsi, la prise en compte de la condition supplémentaire du niveau de vibrations permet de déterminer de manière fiable l'état de fonctionnement du moteur.

En outre, lorsque le moteur est démarré, l'alternateur recharge automatiquement la batterie. Il en résulte que l'état de fonctionnement de l'alternateur peut être détecté de manière fiable sans avoir à intervenir sur le câblage de l'alternateur ou sur la centrale de calcul du constructeur.

Lorsque le dispositif a détecté que le moteur est en marche, l'appareil électrique peut être alimenté. Ainsi, dans le cas où l'appareil électrique est un appareil de forte consommation électrique, tel qu'un appareil frigorifique, ledit appareil peut n'être alimenté que lorsque le moteur est démarré. Il en résulte que l'appareil frigorifique ne sera alimenté via la batterie que lorsque l'alternateur fonctionne, ce qui permet de s'assurer que la batterie ne sera pas déchargée au prochain démarrage du moteur.

En outre, dans le cas où l'appareil est un compteur de temps, ou horamètre, le dispositif de commande selon l'invention permet d'activer ledit horamètre uniquement lorsque le moteur marche, ce qui permet de déterminer précisément le nombre d'heures de fonctionnement de l'appareil.

Il doit être noté qu'on entend par signal de commande directe, un signal de commande qui commande automatiquement l'alimentation de l'appareil électrique embarqué. A l'inverse on entend par signal de commande indirecte, un signal de commande d'un organe intermédiaire, tel qu'un afficheur, délivrant un signal d'autorisation de l'alimentation en courant de l'appareil électrique embarqué.

Le passage de l'état de non-émission à l'état d'émission du signal de commande d'alimentation nécessite que le dispositif de commande ait à la fois détecté un niveau de vibrations suffisant du moteur et que la tension aux bornes de la batterie soit suffisante pour en déduire que la batterie est en charge. Le remplissage de ces conditions permet de s'assurer que l'alternateur fonctionne.

De même, l'arrêt d'émission du signal ou l'empêchement d'une telle émission nécessite que l'on ait détecté à la fois un faible niveau de vibrations pouvant laisser supposer que le moteur est arrêté et une faible tension aux bornes de la batterie signifiant que la batterie n'est pas en état de charge. Le remplissage de ces conditions permet de s'assurer que l'alternateur ne fonctionne pas.

Selon une caractéristique avantageuse de l'invention, l'appareil électrique embarqué est un appareil frigorifique et/ou un compteur de temps.

Selon une caractéristique avantageuse de l'invention, les moyens de détection du niveau de vibrations du moteur du véhicule sont formés par un accéléromètre.

Selon une caractéristique avantageuse de l'invention, l'unité de traitement et de commande comporte également des moyens d'addition et d'amplification des signaux électriques issus des moyens de détection des vibrations du moteur.

Selon une caractéristique avantageuse de l'invention, l'unité de traitement et de commande comporte également des moyens de filtrage des signaux électriques issus des moyens de détection des vibrations du moteur.

Selon une caractéristique avantageuse de l'invention, ledit dispositif étant alimenté par la batterie électrique du moteur, il comporte également des moyens de mise en veille dudit dispositif conçus pour, d'une part, couper l'alimentation du dispositif par la batterie lorsque la valeur de tension de la batterie est inférieure à une valeur de référence et, d'autre part, autoriser l'alimentation du dispositif par la batterie lorsque la valeur de tension de la batterie est supérieure à ladite valeur de référence ou à une autre valeur de référence.

Selon une caractéristique avantageuse de l'invention, ledit dispositif comporte un système de relais dont un connecteur est reliable à la batterie et dont un autre connecteur est reliable à l'appareil électrique, l'état conducteur entre les deux connecteurs étant commandé par le signal de commande émis par les moyens de commande de l'unité de traitement et de commande.

L'invention sera bien comprise à la lecture de la description suivante d'exemples de réalisation, en référence aux dessins annexés dans lesquels :
- la figure 1 est une vue schématique du dispositif de commande d'alimentation relié à un premier appareil électrique à alimenter, tel qu'un compteur de temps ;
- la figure 2 est une vue schématique du dispositif de commande d'alimentation relié à un deuxième appareil électrique à alimenter, tel qu'un groupe froid ;
- la figure 3 est une vue schématique des éléments du dispositif de commande d'alimentation selon un premier mode de réalisation ;
- la figure 4 est une vue schématique des éléments du dispositif de commande d'alimentation selon un deuxième mode de réalisation.

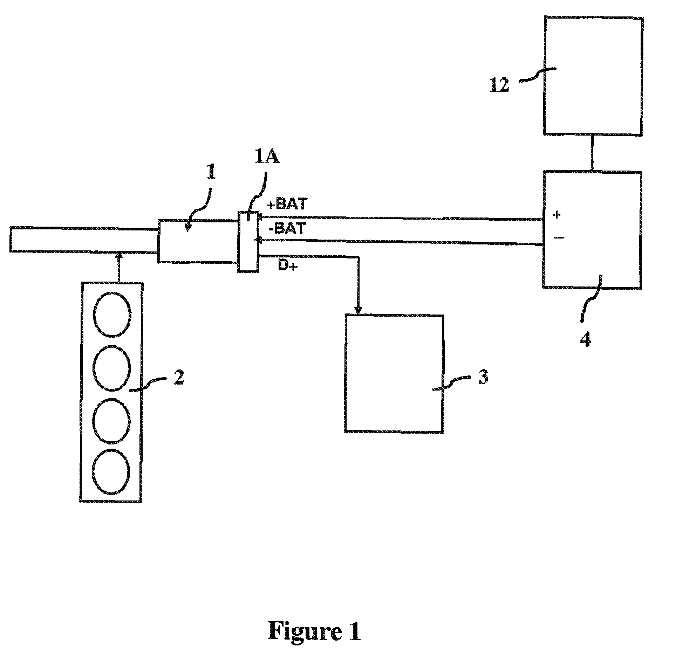

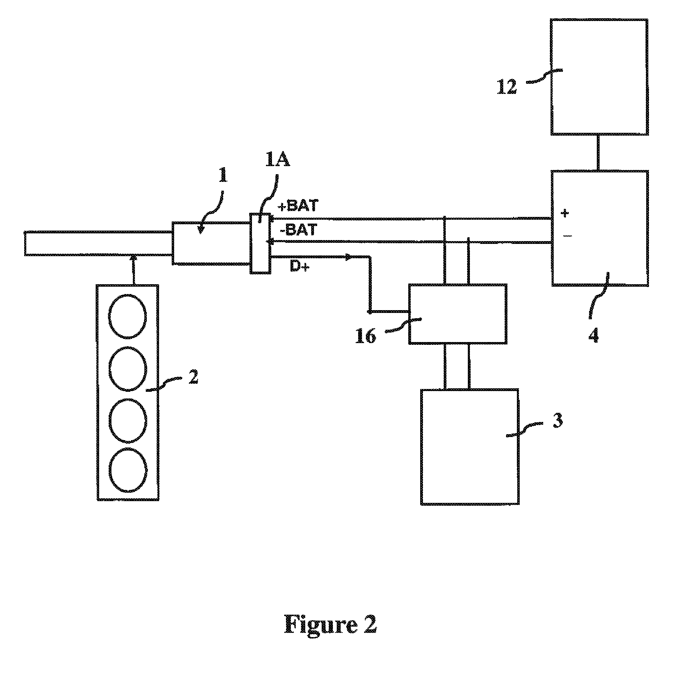

Aux figures 1 et 2, on a représenté un dispositif de commande 1 directe ou indirecte de l'alimentation électrique d'un appareil embarqué 3 sur un véhicule à moteur 2 à combustion interne équipé d'une batterie 4 électrique. Le véhicule comporte un alternateur 12 monté en parallèle de la batterie 4.

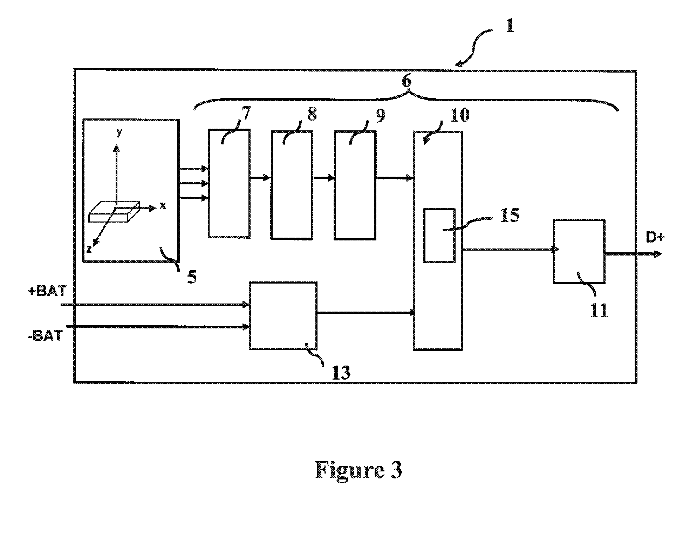

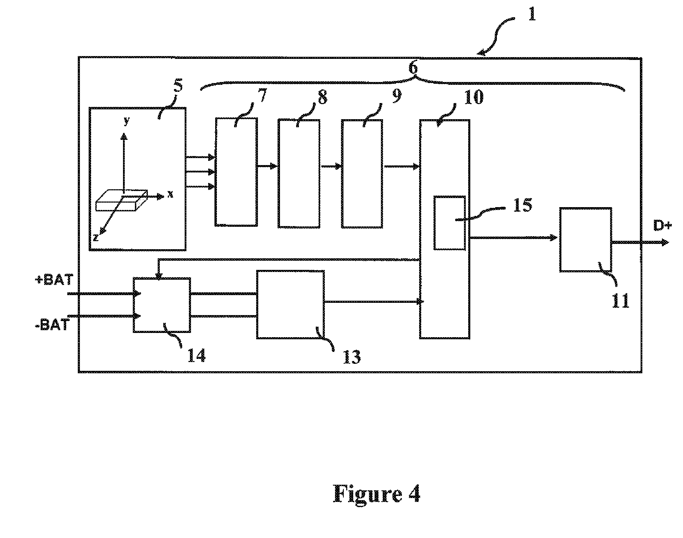

Comme illustré aux figures 3 et 4, le dispositif de commande 1 comprend, d'une part, des moyens de détection 5 du niveau de vibrations du moteur du véhicule et des moyens de détection 13 de la valeur de la tension aux bornes +BAT, - BAT de la batterie 4, lesdits moyens de détection 5, 13 délivrant en sortie des signaux électriques, et, d'autre part, une unité 6 de traitement et de commande, recevant en entrée les signaux électriques issus desdits moyens de détection 5, 13. Ladite unité 6 comporte des moyens de comparaison 15 pour comparer lesdits signaux reçus à des signaux de référence et des moyens de commande 11 émettant ou non en sortie, en fonction au moins du résultat de la comparaison entre lesdits signaux reçus et lesdits signaux de référence, un signal de commande D+ directe ou indirecte de l'alimentation électrique dudit appareil 3.

Comme illustré aux figures 1 et 2, le dispositif de commande 1 selon l'invention se présente sous la forme d'un boîtier étanche moulé. Ce boîtier étanche moulé loge l'accéléromètre recevant en entrée des vibrations et comporte un bloc de connexions 1A étanche pourvu de deux entrées et d'une sortie. Les deux entrées sont reliées aux bornes de la batterie 4 ce qui permet d'une part de déterminer la tension aux bornes de la batterie et d'autre part d'alimenter ledit dispositif de commande 1. La sortie du bloc de connexion est raccordée, de manière directe ou indirecte, à l'appareil 3 électrique. Dans l'exemple illustré aux figures et comme détaillé ci-après la sortie délivre ou non le signal de commande D+ qui, lorsqu'il est émis, dans l'exemple représenté aux figures, correspond à la tension de la batterie.

Dans l'exemple illustré aux figures 3 et 4, les moyens de détection 5 du niveau de vibrations sont formés par un accéléromètre de type piézo-électrique placé sur le bloc-moteur. En variante, on peut prévoir que l'accéléromètre soit positionné sur une partie du véhicule, autre que le moteur, apte à transmettre les vibrations du moteur aux moyens de détection 5. Cet élément peut être le filtre à air, le châssis du moteur, la batterie ou toute autre zone du véhicule où les vibrations du moteur sont peu amorties.

L'accéléromètre convertit une vibration du moteur en un signal électrique analogique. Le signal électrique de sortie de cet accéléromètre est ensuite traité par l'unité 6 de traitement et de commande. L'unité 6 comporte des moyens de filtrage 7 des signaux électriques issus des moyens de détection 5 des vibrations du moteur. L'unité 6 comporte également des moyens d'addition 8 et d'amplification 9 des signaux électriques issus des moyens de détection 5 des vibrations du moteur. Les moyens de comparaison 15 comportent également des moyens de mémorisation, à mémoire de préférence réinscriptible, des signaux de référence.

Comme rappelé ci-dessus, le signal de commande D+ est délivré par les moyens de commande 11 qui sont formés par un contact d'interrupteur analogique de type MOS. Un connecteur de l'interrupteur analogique de type MOS est relié à une borne de la batterie 4 et l'autre connecteur forme la sortie des moyens de commande 11 qui peut être reliée, comme rappelé ci-dessus, directement ou indirectement à l'appareil 3 à alimenter. L'émission du signal de commande D+ est commandée par la fermeture du contact électrique entre les deux connecteurs de l'interrupteur analogique de type MOS, ce qui permet d'obtenir une tension de 12 Volts en sortie des moyens de commande 11. Cet interrupteur analogique de type MOS permet de laisser passer, à l'état conducteur de ces connecteurs, une intensité allant jusqu'à 5 Ampères.

Ledit interrupteur analogique de type MOS est commandé par un autre interrupteur analogique de type MOS, dit relais de commande, activable par un signal de tension de 5 Volts issu d'un microprocesseur 10. L'utilisation de cet interrupteur analogique de commande permet d'isoler le microprocesseur de la tension de la batterie.

Le signal électrique en sortie de l'accéléromètre est filtré puis redressé. Les trois composantes du signal de vibrations correspondant à des vibrations selon les trois directions X,Y et Z, telles que représentées aux figures 3 et 4, sont ensuite additionnées et amplifiées. Le signal de vibrations résultant est ensuite traité par le microprocesseur 10, qui comprend les moyens de comparaison 15, pour comparer ce signal de vibrations au signal de référence qui correspond à un niveau de vibrations de référence au-delà duquel le moteur est considéré comme étant démarré. La comparaison des signaux entre eux est réalisée sur une durée donnée, par exemple 2 secondes.

En ce qui concerne la mesure de la tension, il est prévu deux valeurs de références. La première valeur de référence de tension de la batterie 4 correspond à une valeur au-delà de laquelle la batterie 4 est considérée comme étant en état de charge. Pour une batterie de 12 Volts, cette valeur de référence est fixée à 13,5 Volts.

La deuxième valeur de référence correspondant à la valeur de référence de tension pour laquelle la batterie est considérée comme n'étant pas en état de charge est de préférence différente de la valeur de tension de 13,5 Volts pour permettre un fonctionnement stable et fiable du dispositif de commande. Cette deuxième valeur de référence de tension est fixée à 13 Volts.

Le microprocesseur 10 est programmé pour exécuter au moins deux opérations conditionnelles.

La première opération, dite opération conditionnelle d'alimentation, consiste en ce que, si, pendant une durée prédéterminée, les moyens de comparaison 15 déterminent que le niveau de vibrations détecté du moteur 2 est supérieur à un niveau de référence et que la valeur de la tension détectée est supérieure à une valeur de référence, l'unité 6 via les moyens de commande 11 émet le signal de commande D+ directe ou indirecte de l'alimentation électrique dudit appareil 3. En particulier, ici, une tension de la batterie supérieure à 13,5 Volts et la détection de vibrations du moteur signifient que la batterie est en train d'être rechargée par l'alternateur.

La deuxième opération dite opération conditionnelle de non-alimentation consiste en ce que, si, pendant une durée prédéterminée, les moyens de comparaison 15 déterminent que le niveau de vibrations détecté est inférieur à un niveau de référence et que la valeur de la tension détectée est inférieure à une valeur de référence, l'unité 6 via les moyens de commande 11 stoppe ou empêche l'émission du signal de commande D+ directe ou indirecte de l'alimentation électrique dudit appareil 3. En particulier, ici, une tension de la batterie inférieure à 13 Volts et l'absence de détection de vibrations du moteur signifient que le moteur n'est pas démarré et donc que la batterie n'est pas rechargée par l'alternateur.

Le passage de l'état de non-émission à l'état d'émission est asservi au remplissage des conditions de la première opération et le passage de l'état d'émission à l'état de non-émission est asservi au remplissage des conditions de la deuxième opération.

Ainsi, dans l'hypothèse où, lors du précédent cycle de calcul, le signal de commande d'alimentation a été émis et où au cours du cycle de calcul suivant :
- soit le niveau de vibrations détecté est inférieur au niveau de référence, mais la tension mesurée aux bornes de la batterie reste supérieure à 13 Volts,
- soit la tension mesurée aux bornes de la batterie devient inférieure à 13 Volts, mais le niveau de vibrations détecté reste supérieur au niveau de référence,
alors les moyens de commande 11 sont laissés dans l'état d'émission du signal de commande D+ d'alimentation.

De même, dans l'hypothèse où, lors du précédent cycle de calcul, le signal de commande d'alimentation a été stoppé ou empêché et où au cours du cycle de calcul suivant :
- soit la tension mesurée aux bornes de la batterie devient supérieure à 13,5 Volts, mais le niveau de vibrations détecté reste inférieur au niveau de référence,
- soit le niveau de vibrations détecté devient supérieur au niveau de référence, mais la tension mesurée aux bornes de la batterie devient inférieure à 13 Volts, alors les moyens de commande sont laissés dans l'état de non-émission du signal de commande d'alimentation.

Dans l'exemple illustré à la figure 2, l'appareil 3 électrique embarqué est un appareil de forte consommation électrique, tel qu'un appareil frigorifique ou groupe froid. Il est alors prévu un système de relais 16 à bobine dont un connecteur est relié à la batterie 4 et dont un autre connecteur est relié à l'appareil 3 électrique, l'état conducteur entre les deux connecteurs du système de relais 16 à bobine étant commandé par le signal de commande D+ émis par les moyens de commande 11 de l'unité 6 de traitement et de commande.

Dans l'exemple illustré à la figure 1, l'appareil 3 électrique embarqué est un appareil de faible consommation électrique tel qu'un compteur de temps. Un tel appareil peut ainsi être relié directement à la sortie du dispositif d'alimentation qui est apte à lui délivrer une tension de 12 Volts avec une intensité suffisante (jusqu'à 5 Ampères) pour l'alimentation d'un tel appareil de faible puissance.

Lorsque l'appareil 3 électrique embarqué est un compteur de temps, le dispositif de commande associé à ce compteur de temps permet de déterminer précisément le nombre d'heures de fonctionnement du moteur. Dans ce cas, le nombre d'heures de fonctionnement du moteur est établi par rapport au nombre d'heures de vibrations détectées et non pas par rapport au nombre de kilomètres parcourus par le véhicule, ce qui permet de tenir compte des moments où le véhicule est à l'arrêt et moteur tournant.

Dans un autre mode de réalisation non représenté, le signal de commande D+ alimente un organe électrique tel qu'un dispositif d'émission de signaux sonores ou lumineux informant le conducteur que l'alimentation de l'appareil électrique embarqué est autorisée.

Selon un mode de réalisation préférentiel de l'invention, ledit dispositif 1 comporte également des moyens de mise en veille et de réveil 14 dudit dispositif 1. Ces moyens de mise en veille et de réveil 14 dudit dispositif 1 sont conçus pour, d'une part, couper l'alimentation du dispositif par la batterie 4 lorsque la valeur de tension de la batterie 4 est inférieure à une valeur de référence et, d'autre part, autoriser l'alimentation du dispositif par la batterie 4 lorsque la valeur de tension de la batterie 4 est supérieure à ladite valeur de référence ou à une autre valeur de référence. Le réveil du dispositif de commande se fait automatiquement lorsque la tension de la batterie est supérieure à la valeur seuil de 13 Volts (pour une batterie de 12 Volts) et le microprocesseur maintient les moyens de mise en veille et de réveil 14 actifs jusqu'à ce que la tension de batterie descende en dessous de 13 Volts.

Il est également prévu des régulateurs de tension pour faire fonctionner le dispositif de commande aussi bien avec une batterie de 12 Volts qu'avec une batterie de 24 Volts. Avec une batterie de 24 Volts, la valeur de seuil de tension précédemment fixée à 13,5 Volts est remplacée par la valeur de 27 Volts et la valeur de seuil de tension précédemment fixée à 13 Volts est remplacée par la valeur de 26 Volts.

La présente invention n'est nullement limitée au mode de réalisation décrit et représenté, mais l'homme du métier saura y apporter toute variante conforme à son esprit.

## Revendications

1. Dispositif de commande (1) directe ou indirecte de l'alimentation électrique d'un appareil embarqué (3) sur un véhicule à moteur (2) à combustion interne équipé d'une batterie (4) électrique reliée à un alternateur (12),
ledit dispositif comprenant d'une part, des moyens de détection (5) du niveau de vibrations du moteur (2) du véhicule et des moyens de détection (13) de la valeur de la tension aux bornes (+BAT, -BAT) de la batterie (4), lesdits moyens de détection (5, 13) délivrant en sortie des signaux électriques, et, d'autre part, une unité (6) de traitement et de commande, recevant en entrée les signaux électriques issus desdits moyens de détection (5, 13), ladite unité (6) comportant des moyens de comparaison (15) pour comparer lesdits signaux reçus à des signaux de référence et des moyens de commande (11) émettant ou non en sortie, en fonction au moins du résultat de la comparaison entre lesdits signaux reçus et lesdits signaux de référence, un signal de commande (D+) directe ou indirecte de l'alimentation électrique dudit appareil (3),
**caractérisé en ce que** l'unité (6) de traitement et de commande est conçue pour exécuter au moins deux opérations conditionnelles, consistant pour la première opération dite opération conditionnelle d'alimentation **en ce que**, si, pendant une durée prédéterminée, les moyens de comparaison (15) déterminent que le niveau de vibrations détecté du moteur (2) est supérieur à un niveau de référence et que la valeur de la tension détectée est supérieure à une valeur de référence, l'unité (6) via les moyens de commande (11) émet le signal de commande (D+) directe ou indirecte de l'alimentation électrique dudit appareil (3) ; et pour la deuxième opération dite opération conditionnelle de non-alimentation **en ce que**, si, pendant une durée prédéterminée, les moyens de comparaison (15) déterminent que le niveau de vibrations détecté est inférieur à un niveau de référence et que la valeur de la tension détectée est inférieure à une valeur de référence, l'unité (6) via les moyens de commande (11) stoppe ou empêche l'émission du signal de commande (D+) directe ou indirecte de l'alimentation électrique dudit appareil (3),
et **en ce que** le passage de l'état de non-émission à l'état d'émission est asservi au remplissage des conditions de la première opération et le passage de l'état d'émission à l'état de non-émission est asservi au remplissage des conditions de la deuxième opération.

2. Dispositif de commande (1) selon la revendication 1,
**caractérisé en ce que** le niveau de référence de vibrations correspond à un niveau au-delà duquel le moteur (2) est considéré comme étant démarré et la valeur de référence de tension de la batterie (4) correspond à une valeur au-delà de laquelle la batterie (4) est considérée comme étant en état de charge.

3. Dispositif de commande (1) selon l'une des revendications précédentes,
**caractérisé en ce que** l'appareil (3) électrique embarqué est un appareil frigorifique et/ou un compteur de temps.

4. Dispositif de commande (1) selon l'une des revendications précédentes,
**caractérisé en ce que** les moyens de détection (5) du niveau de vibrations du moteur du véhicule sont formés par un accéléromètre.

5. Dispositif de commande (1) selon l'une des revendications précédentes,
**caractérisé en ce que** l'unité (6) de traitement et de commande comporte également des moyens d'addition (8) et d'amplification (9) des signaux électriques issus des moyens de détection (5) des vibrations du moteur.

6. Dispositif de commande (1) selon l'une des revendications précédentes,
**caractérisé en ce que** l'unité (6) de traitement et de commande comporte également des moyens de filtrage (7) des signaux électriques issus des moyens de détection (5) des vibrations du moteur.

7. Dispositif de commande (1) selon l'une des revendications précédentes,
**caractérisé en ce que,** ledit dispositif (1) étant alimenté par la batterie (4) électrique du moteur, ledit dispositif (1) comporte également des moyens de mise en veille et de réveil (14) dudit dispositif (1) conçus pour, d'une part, couper l'alimentation du dispositif par la batterie (4) lorsque la valeur de tension de la batterie (4) est inférieure à une valeur de référence et, d'autre part, autoriser l'alimentation du dispositif par la batterie (4) lorsque la valeur de tension de la batterie (4) est supérieure à ladite valeur de référence ou à une autre valeur de référence.

8. Dispositif de commande (1) selon l'une des revendications précédentes,
**caractérisé en ce qu'**il comporte un système de relais (16) dont un connecteur est reliable à la batterie (4) et dont un autre connecteur est reliable à l'appareil (3) électrique, l'état conducteur entre les deux connecteurs étant commandé par le signal de commande émis par les moyens de commande (11) de l'unité (6) de traitement et de commande.
